(19) Europäisches Patentamt
European Patent Office
Office européen des brevets

(11) EP 4 684 967 A1

(12) EUROPEAN PATENT APPLICATION

(43) Date of publication:
28.01.2026 Bulletin 2026/05

(21) Application number: 25182003.1

(22) Date of filing: 11.06.2025

(51) International Patent Classification (IPC):
B41J 2/165 (2006.01)      B41J 2/21 (2006.01)
G06K 15/02 (2006.01)      G06N 3/08 (2023.01)
H04N 1/407 (2006.01)

(52) Cooperative Patent Classification (CPC):
B41J 2/16579; B41J 2/16585; B41J 2/2142;
B41J 2/2146; G06K 15/027; G06N 3/08;
H04N 1/4015; H04N 1/4078

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.07.2024 JP 2024120745

(71) Applicant: SCREEN Holdings Co., Ltd.
Kyoto-shi, Kyoto 602-8585 (JP)

(72) Inventors:
• KUBO, Yusuke
  Kyoto, 602-8585 (JP)
• ICHIOKA, Yoshikazu
  Kyoto, 602-8585 (JP)

(74) Representative: Goddar, Heinz J.
Boehmert & Boehmert
Anwaltspartnerschaft mbB
Pettenkoferstrasse 22
80336 München (DE)

(54) **STREAK-SHAPED DEFECT CLASSIFICATION METHOD AND STREAK-SHAPED DEFECT CLASSIFICATION SYSTEM**

(57) By causing a learning model to learn a relationship between feature values and classification destinations using at least a peak average intensity value and a variation in average intensity value around a streak-shaped defect as the feature values, a classification model for classifying the streak-shaped defect is generated (S150). Thereafter, when the streak-shaped defect is detected, at least the peak average intensity value and the variation are obtained as the feature amounts representing features of the streak-shaped defect (S180). Then, by inputting the feature amounts to the classification model, the classification destination depending on the features of the detected streak-shaped defect is decided (S190).

Fig.14

EP 4 684 967 A1

**Description**

BACKGROUND OF THE INVENTION

Field of the Invention

The present invention relates to a technique for classifying streak-shaped defects that may occur in a print image when a nozzle in an ejection failure state (hereinafter, referred to as an "ejection failure nozzle") is present in an inkjet printing apparatus.

Description of Related Art

An inkjet printing apparatus that performs printing by ejecting ink onto a print medium such as printing paper and a film is widely known. In the inkjet printing apparatus, when an ejection interval becomes longer, drying of the ink due to evaporation of a solvent in the vicinity of a nozzle, mixing of air bubbles into the nozzle, adhesion of dust to the nozzle, and the like may occur during a period when printing is performed. As a result, an ejection failure such as a phenomenon in which the ink is not ejected from the nozzle or a phenomenon in which the landing position of the ink droplet ejected from the nozzle deviates from the original position may occur. When such ejection failure occurs, a high-quality print image cannot be obtained. For example, a streak-shaped defect image (hereinafter, referred to as a "streak-shaped defect" or simply as a "streak") corresponding to an ejection failure nozzle appears in the print image. As for the inkjet printing apparatus, it is an important problem to suppress the occurrence of such a streak-shaped defect. Note that, in a case where the streak-shaped defect occurs, for example, maintenance processing (wipes, purges, flushing, etc.) for recovering the function of the ejection failure nozzle is performed.

Meanwhile, in order to prevent occurrence of a streak-shaped defect in a print image of a printed matter as an actual product, the streak-shaped defect is detected on the basis of a captured image (imaging data) obtained by capturing a print image of a test chart with an imaging device at an appropriate timing. A method of detecting a streak-shaped defect is disclosed in, for example, Japanese Laid-Open Patent Publication No. 2017-181094. According to the method disclosed in Japanese Laid-Open Patent Publication No. 2017-181094, a captured image obtained by capturing a print image of an image having a uniform density over the entire surface (so-called "solid image") is divided into a plurality of local regions in a direction in which the streak extends. Then, with a result obtained by obtaining an average value of signal values in the local region for each pixel position regarding a direction orthogonal to the direction in which the streak extends used as a profile (average profile), the streak-shaped defect is detected on the basis of a result of comparing each value of the profile with two thresholds (a first threshold and a second threshold).

According to the conventional method of detecting a streak-shaped defect, a streak (streak-shaped defect) can be detected on the basis of a captured image of a print image such as a test chart, but a degree of the defect of each streak (a degree of influence of the defect on the quality of a printed matter) cannot be grasped. In other words, streaks cannot be classified depending on the degree of defects. In this regard, for example, a printing state is quantitatively evaluated on a customer side after the inkjet printing apparatus is delivered from a manufacturer to a customer (for example, a printing company), and at that time, not only the number of streaks but also the degree of defect of each streak needs to be determined. Hereinafter, an example of a determination criterion in a case where the streak is classified into three stages of "large, medium, and small" will be described.

Large: Defect to the extent that the base is clearly visible from one end to the other end of a print region
Small: Defect that is not macroscopically noticeable but microscopically to the extent that the base is visible and hidden in a linear manner
Medium: Intermediate degree of defect between "large" and "small"

If the streak is classified depending on the degree of the defect, it is possible to take a measure depending on the degree of the defect of the generated streak. For example, it is possible to take a measure such as "cleaning is performed in a case where a streak classified as "large" is present, flushing is performed in a case where a streak classified as "large" is not present and a streak classified as "medium" is present, and printing is performed as it is in a case where a streak classified as "large" and a streak classified as "medium" are not present and a streak classified as "small" is present". However, as described above, according to the conventional method, the degree of the defect of each streak cannot be grasped.

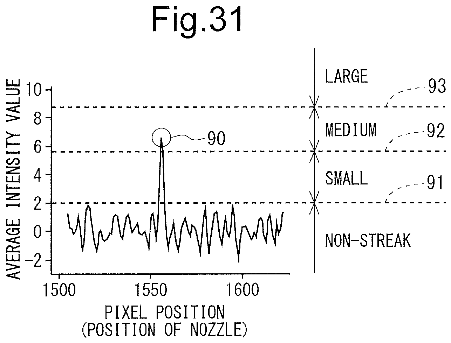

Furthermore, it is conceivable to automatically classify streaks on the basis of a result of comparing data of an average intensity value (the data corresponds to a profile described in Japanese Laid-Open Patent Publication No. 2017-181094) obtained on the basis of a captured image of a print image of a test chart with a threshold prepared in advance. In this regard, for example, as illustrated in Fig. 31, it is conceivable to classify the streak on the basis of a result of comparing the data of the average intensity value with three thresholds (a first threshold 91, a second threshold 92, and a third threshold 93). Note that, in the example illustrated in Fig. 31, the degree of the streak defect corresponding to an average intensity value at a position denoted by reference sign 90 is determined as "medium". However, there is a large difference between a classification result obtained by the method of automatically classifying the streak on the basis of the average intensity value and a classification result obtained by visual observation by a skilled person.

SUMMARY OF THE INVENTION

Therefore, an object of the present invention is to automatically classify streak-shaped defects included in a print image so as to obtain a result close to the classification by visual observation.

One aspect of the present invention is directed to a streak-shaped defect classification method of classifying a streak-shaped defect included in a print image, the streak-shaped defect classification method including:

> a test chart printing step (S210) of printing a test chart for streak-shaped defect detection;
> an imaging step (S220) of capturing a print image obtained in the test chart printing step (S210);
> an average intensity value calculation step (S230 to S270) of calculating, for each of a plurality of pixel positions continuous in a second direction orthogonal to a first direction in which the streak-shaped defect extends, an average intensity value (63) that is an average value of intensity values of a plurality of pixels having a same pixel position regarding the second direction on a basis of imaging data (62) including a plurality of intensity values obtained in the imaging step (S220);
> a feature amount calculation step (S180) of obtaining a feature amount (65) representing a feature of the streak-shaped defect on a basis of the imaging data (62) or the average intensity value (63) for each of the plurality of pixel positions; and
> a classification destination decision step (S190) of obtaining a classification destination (67) depending on the feature amount (65) by inputting the feature amount (65) to a learned learning model (592) for classifying the streak-shaped defect,
> wherein the feature amount calculation step (S180) includes:
>
>> a local maximum value extraction step (S310) of extracting a local maximum value corresponding to the streak-shaped defect from the average intensity value (63) for each of the plurality of pixel positions; and
>> a variation calculation step (S330) of calculating a variation in the average intensity value (63) around the streak-shaped defect, and
>> in the classification destination decision step (S190), the local maximum value and the variation are inputted as the feature amount to the learned learning model (592).

According to such a configuration, in a case where the streak-shaped defect is included in the print image of the test chart for streak-shaped defect detection, the feature amount representing the feature of the streak-shaped defect is obtained. As the feature amount, the local maximum value of the average intensity value corresponding to the streak-shaped defect and the variation in the average intensity value around the streak-shaped defect are obtained. Then, by inputting the feature amount to the learned learning model for classifying the streak-shaped defect, a classification destination depending on the feature of the streak-shaped defect is obtained. By the way, according to human vision, the greater the variation in brightness (intensity value) around the streak, the less likely the streak is to be perceived. That is, the degree of the defect felt by a person with respect to the streak included in the print image depends on the variation in the intensity value around the streak. In this regard, according to the one aspect of the present invention, since the streak-shaped defect is classified in consideration of the variation in the average intensity value around the streak-shaped defect, a result close to the classification by visual observation can be obtained. Furthermore, since the learned learning model is used for the classification, the streak-shaped defect included in the print image is automatically classified. From the above, it is possible to automatically classify the streak-shaped defects included in the print image so as to obtain a result close to the classification by visual observation.

Another aspect of the present invention is directed to a streak-shaped defect classification method of classifying a streak-shaped defect included in a print image, the streak-shaped defect classification method including:

> a first test chart printing step (S210) of printing a first test chart for streak-shaped defect detection;
> a first imaging step (S220) of capturing a print image obtained in the first test chart printing step (S210);
> a first average intensity value calculation step (S230 to S270) of calculating, for each of a plurality of pixel positions continuous in a second direction orthogonal to a first direction in which the streak-shaped defect extends, a first average intensity value (63) that is an average value of intensity values of a plurality of pixels having a same pixel position regarding the second direction on a basis of first imaging data including a plurality of intensity values obtained in the first imaging step (S220);
a first streak detection step (S120) of detecting the streak-shaped defect on a basis of the first imaging data (62) or the first average intensity value (63) for each of the plurality of pixel positions;
a first local maximum value extraction step (S310) of extracting, as a first local maximum value, a local maximum value corresponding to the streak-shaped defect detected in the first streak detection step (S120) from the first average intensity value (63) for each of the plurality of pixel positions;
a first variation calculation step (S330) of calculating, as a first variation, a variation in the first average intensity value (63) around the streak-shaped defect detected in the first streak detection step (S120);
a classification destination designation step (S140) of, by a worker, designating a classification destination corresponding to a combination of the first local maximum value and the first variation;
a learning step (S150) of causing a learning model to learn a relationship between a combination of the first local maximum value and the first variation and a classification destination using, as learning data, the first local maximum value, the first variation, and the classification destination designated in the classification destination designation step (S140);
a second test chart printing step (S210) of printing a second test chart for streak-shaped defect detection;
a second imaging step (S220) of capturing a print image obtained in the second test chart printing step (S210);
a second average intensity value calculation step (S230 to S270) of calculating, for each of the plurality of pixel positions, a second average intensity value (63) that is an average value of intensity values of a plurality of pixels having a same pixel position regarding the second direction on a basis of second imaging data (62) including a plurality of intensity values obtained in the second imaging step (S220);
a second streak detection step (S170) of detecting the streak-shaped defect on a basis of the second imaging data (62) or the second average intensity value (63) for each of the plurality of pixel positions;
a second local maximum value extraction step (S310) of extracting, as a second local maximum value, a local maximum value corresponding to the streak-shaped defect detected in the second streak detection step (S170) from the second average intensity value (63) for each of the plurality of pixel positions;
a second variation calculation step (S330) of calculating, as a second variation, a variation in the second average intensity value (63) around the streak-shaped defect detected in the second streak detection step (S170); and,
a classification destination decision step (S190) of obtaining a classification destination (67) depending on a combination of the second local maximum value and the second variation by inputting the second local maximum value and the second variation to the learning model (592) learned in the learning step (S150).

Still another aspect of the present invention is directed to a streak-shaped defect classification system that classifies a streak-shaped defect included in a print image, the streak-shaped defect classification system including:

an average intensity value calculation unit (550) that calculates, for each of a plurality of pixel positions continuous in a second direction orthogonal to a first direction in which the streak-shaped defect extends, an average intensity value (63) that is an average value of intensity values of a plurality of pixels having a same pixel position regarding the second direction on a basis of imaging data (62) including a plurality of intensity values obtained by capturing a print image of a test chart for streak-shaped defect detection;
a feature amount calculation unit (570) that obtains a feature amount (65) representing a feature of the streak-shaped defect on a basis of the imaging data (62) or the average intensity value (63) for each of the plurality of pixel positions; and,
a classification destination decision unit that obtains a classification destination (67) depending on the feature amount (65) by inputting the feature amount (65) to a learned learning model (592) for classifying the streak-shaped defect, wherein the feature amount calculation unit (570) includes:

a local maximum value extraction unit (572) that extracts a local maximum value corresponding to the streak-shaped defect from the average intensity value (63) for each of the plurality of pixel positions; and
a variation calculation unit (576) that calculates a variation in the average intensity value (63) around the streak-shaped defect, and
the local maximum value and the variation are inputted as the feature amount (65) to the learned learning model (592).

These and other objects, features, modes, and advantageous effects of the present invention will become more apparent from the following detailed description of the present invention with reference to the accompanying drawings.

BRIEF DESCRIPTION OF THE DRAWINGS

Fig. 1 is an overall configuration diagram of a printing system according to an embodiment of the present invention.

Fig. 2 is a schematic diagram illustrating a configuration example of an inkjet printing apparatus in the embodiment.

Fig. 3 is a plan view illustrating a configuration example of a recording unit in the embodiment.

Fig. 4 is a diagram for explaining an arrangement of nozzles in an ink ejection head in the embodiment.

Fig. 5 is a block diagram illustrating a hardware configuration of a print control device in the embodiment.

Fig. 6 is a block diagram illustrating a functional configuration of a control unit in the embodiment.

Fig. 7 is a block diagram illustrating a detailed functional configuration of a feature amount calculation unit in the embodiment.

Fig. 8 is a flowchart illustrating a schematic procedure of a series of processing for classifying a streak-shaped defect in the embodiment.

Fig. 9 is a diagram illustrating an example of average intensity values for a plurality of pixel positions in the embodiment.

Fig. 10 is a flowchart illustrating a detailed procedure of preprocessing in the embodiment.

Fig. 11 is a diagram schematically illustrating a test chart in the embodiment.

Fig. 12 is a diagram for explaining processing of removing noise using a median filter in the embodiment.

Fig. 13 is a diagram for explaining processing of correcting brightness unevenness using a median filter in the embodiment.

Fig. 14 is a diagram for explaining detection of a streak-shaped defect in the embodiment.

Fig. 15 is a diagram illustrating an example of a stepwise chart in the embodiment.

Fig. 16 is a diagram for explaining detection of a streak-shaped defect using a stepwise chart in the embodiment.

Fig. 17 is a flowchart illustrating a detailed procedure of processing of calculating a feature amount in the embodiment.

Fig. 18 is a diagram for explaining how to obtain a peak intensity value in the embodiment.

Fig. 19 is a diagram for explaining arithmetic processing of fitting a relationship between pixel positions and average intensity values to a Gaussian function in the embodiment.

Fig. 20 is a diagram for explaining a streak width in the embodiment.

Fig. 21 is a diagram for explaining calculation of a variation in the average intensity value around the streak-shaped defect in the embodiment.

Fig. 22 is a diagram for explaining an identification plane obtained by learning by a support vector machine in the embodiment.

Fig. 23 is a diagram for explaining learning (learning of a relationship between a combination of three feature amounts and a classification destination) by a learning unit in the embodiment.

Fig. 24 is a diagram for explaining classification by a classification unit in the embodiment.

Fig. 25 is a diagram for explaining an experiment for confirming the effects of the embodiment.

Fig. 26 is a diagram for explaining learning (learning of a relationship between a combination of two feature amounts and a classification destination) by a learning unit in a first modification of the embodiment.

Fig. 27 is a diagram for explaining classification by a classification unit in the first modification.

Fig. 28 is a diagram illustrating an example of a structure of a neural network used in a second modification of the embodiment.

Fig. 29 is a diagram for explaining processing during learning using the neural network in the second modification.

Fig. 30 is a diagram for explaining processing during learning using the neural network in the second modification.

Fig. 31 is a diagram for explaining classifying a streak on the basis of a result of comparing data of an average intensity value with three thresholds.

DETAILED DESCRIPTION OF PREFERRED EMBODIMENTS

Hereinafter, an embodiment of the present invention will be described with reference to the accompanying drawings.

<1. Overall Configuration of Printing System>

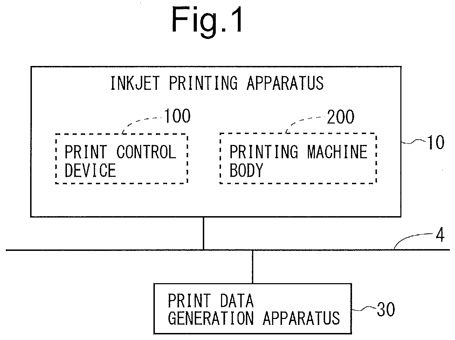

Fig. 1 is an overall configuration diagram of a printing system according to an embodiment of the present invention. The printing system includes an inkjet printing apparatus 10 and a print data generation apparatus 30. The inkjet printing apparatus 10 and the print data generation apparatus 30 are connected to each other by a LAN 4. The print data generation apparatus 30 generates print data by performing rasterization processing or the like on submitted data such as a PDF file. This print data is data not subjected to halftone processing, and the halftone processing is performed by a print control device 100 in the inkjet printing apparatus 10 as described later. The print data generated by the print data generation apparatus 30 is transmitted to the inkjet printing apparatus 10 via the LAN 4. The inkjet printing apparatus 10 includes a printing machine body 200 and the print control device 100 that controls an operation of the printing machine body 200. The inkjet printing apparatus 10 outputs a print image on printing paper as a print medium on the basis of print data transmitted from the print data generation apparatus 30 without using a printing plate. Note that the present invention can also be applied to a case where a print medium (for example, a film) other than the printing paper is used. In the present embodiment, a streak-shaped defect classification system is realized by the print control device 100.

<2. Configuration of Printing Machine Body of Inkjet Printing Apparatus>

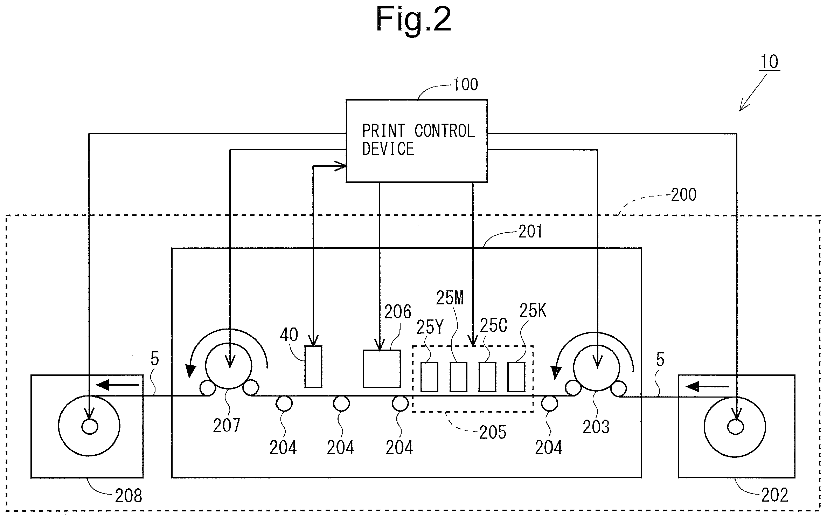

Fig. 2 is a schematic diagram illustrating a configuration example of the inkjet printing apparatus 10. As described above, the inkjet printing apparatus 10 includes the print control device 100 and the printing machine body 200.

The printing machine body 200 includes a paper feeding unit 202 that supplies printing paper 5 to a printing mechanism 201, the printing mechanism 201 that performs printing on the printing paper 5, and a paper winding unit 208 that winds the printing paper 5 after printing in a roll.

The printing mechanism 201 includes a first drive roller 203 for conveying the printing paper 5 to the inside, a plurality of support rollers 204 for conveying the printing paper 5 inside the printing mechanism 201, a recording unit 205 that records a print image on the printing paper 5, a drying mechanism 206 that dries the printing paper 5 on which the print image is recorded, and a second drive roller 207 for outputting the printing paper 5 from the inside of the printing mechanism 201. The recording unit 205 includes a K color head unit 25K that ejects K color (black) ink, a C color head unit 25C that ejects C color (cyan) ink, an M color head unit 25M that ejects M color (magenta) ink, and a Y color head unit 25Y that ejects Y color (yellow) ink. Furthermore, the printing mechanism 201 includes a contact image sensor (CIS) 40 as an imaging device that captures a print image recorded on the printing paper 5 by the recording unit 205. Imaging data (captured image) obtained by capturing the print image by the contact image sensor 40 is sent to the print control device 100. Note that, in the following description, in a case where the color of the ink ejected from the head unit is not distinguished, the head unit is denoted by reference sign 25.

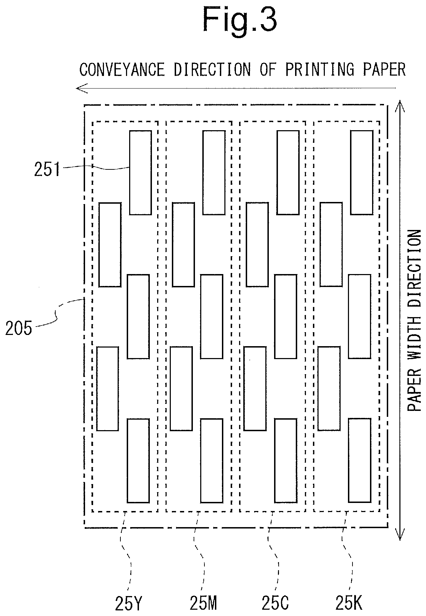

Fig. 3 is a plan view illustrating a configuration example of the recording unit 205. As illustrated in Fig. 3, the recording unit 205 includes the K color head unit 25K, the C color head unit 25C, the M color head unit 25M, and the Y color head unit 25Y arranged in a row in a conveyance direction of the printing paper 5. Each head unit 25 includes a plurality of ink ejection heads (print heads) 251 arranged in a staggered manner. Each ink ejection head 251 includes a large number of nozzles (not illustrated in Fig. 3) that eject ink. Each nozzle of the ink ejection head 251 included in the K color head unit 25K ejects K color ink, each nozzle of the ink ejection head 251 included in the C color head unit 25C ejects C color ink, each nozzle of the ink ejection head 251 included in the M color head unit 25M ejects M color ink, and each nozzle of the ink ejection head 251 included in the Y color head unit 25Y ejects Y color ink.

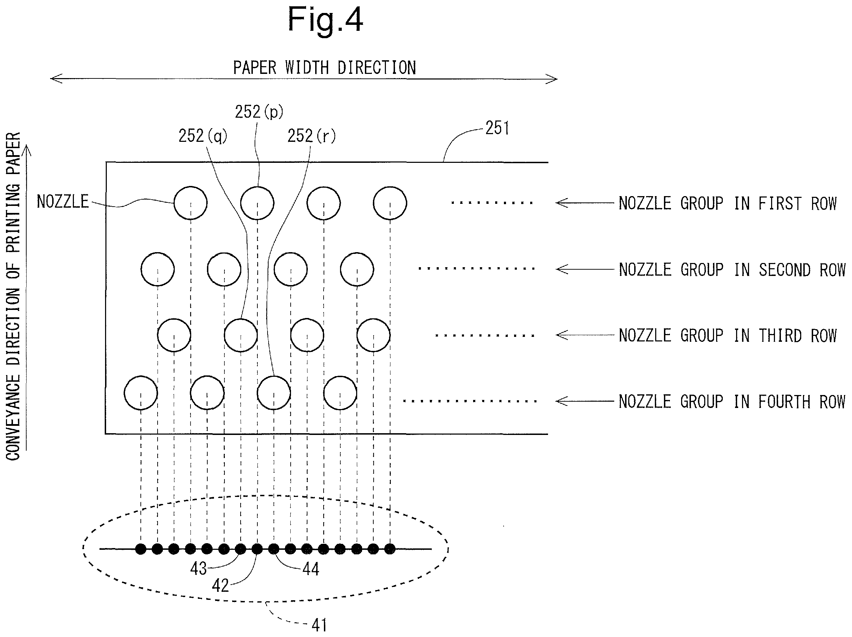

Fig. 4 is a diagram for explaining an arrangement of nozzles in the ink ejection head 251. Typically, the ink ejection head 251 includes a plurality of rows of nozzle groups each including a plurality of nozzles arranged side by side in a paper width direction. In the example illustrated in Fig. 4, four rows of nozzle groups are included in the ink ejection head 251. A portion denoted by reference sign 41 in Fig. 4 schematically illustrates landing positions, on the printing paper 5, of the ink ejected from each nozzle. The plurality of nozzles in the ink ejection head 251 are arranged so that the landing position of the ink ejected from the nozzle included in the nozzle group in the first row, the landing position of the ink ejected from the nozzle included in the nozzle group in the second row, the landing position of the ink ejected from the nozzle included in the nozzle group in the third row, and the landing position of the ink ejected from the nozzle included in the nozzle group in the fourth row are different positions. For example, the landing position of the ink ejected from each nozzle included in the nozzle group in the first row is a position between the landing position of the ink ejected from the nozzle included in the nozzle group in the third row and the landing position of the ink ejected from the nozzle included in the nozzle group in the fourth row. In the example illustrated in Fig. 4, a landing position 42 of the ink ejected from a nozzle denoted by reference sign 252(p) is a position between a landing position 43 of the ink ejected from a nozzle denoted by reference sign 252(q) and a landing position 44 of the ink ejected from a nozzle denoted by reference sign 252(r).

Note that the configuration illustrated in Figs. 2 to 4 is an example, and specific configurations of the printing mechanism 201, the recording unit 205, and the ink ejection head 251 are not particularly limited.

<3. Hardware Configuration of Print Control Device>

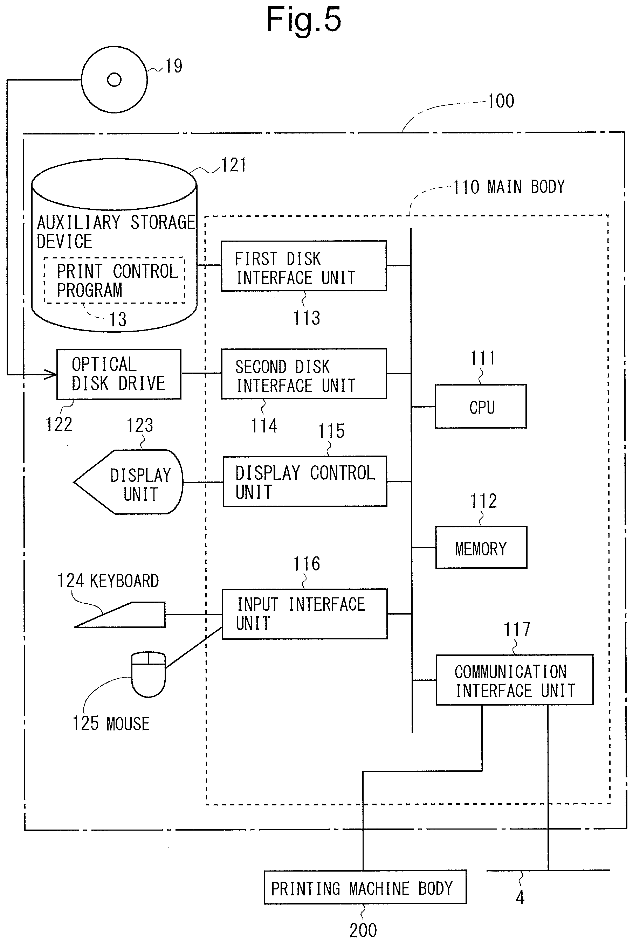

Fig. 5 is a block diagram illustrating a hardware configuration of the print control device 100. As illustrated in Fig. 5, the print control device 100 includes a main body 110, an auxiliary storage device 121, an optical disk drive 122, a display unit 123, a keyboard 124, a mouse 125, and the like. The main body 110 includes a CPU 111, a memory 112, a first disk interface unit 113, a second disk interface unit 114, a display control unit 115, an input interface unit 116, and a communication interface unit 117. The CPU 111, the memory 112, the first disk interface unit 113, the second disk interface unit 114, the display control unit 115, the input interface unit 116, and the communication interface unit 117 are connected to each other via a system bus. The auxiliary storage device 121 is connected to the first disk interface unit 113. The optical disk drive 122 is connected to the second disk interface unit 114. The display unit (display device) 123 is connected to the display control unit 115. The keyboard 124 and the mouse 125 are connected to the input interface unit 116. The printing machine body 200 is connected to the communication interface unit 117 via a communication cable. Furthermore, the communication interface unit 117 is connected to the LAN 4. The auxiliary storage device 121 is a magnetic disk device or the like. An optical disk 19 as a computer-readable recording medium such as a CD-ROM or a DVD-ROM is inserted into the optical disk drive 122. The display unit 123 is a liquid crystal display or the like. The display unit 123 is used to display information desired by an operator. The keyboard 124 and the mouse 125 are used by a worker to input instructions to the print control device 100.

The auxiliary storage device 121 stores a print control program (program for controlling execution of printing processing by the printing machine body 200) 13. The print control program 13 according to the present embodiment includes, as a subprogram, a streak-shaped defect classification program for classifying a streak-shaped defect included in a print image. The CPU 111 implements various functions of the print control device 100 by reading the print control program 13 stored in the auxiliary storage device 121 into the memory 112 and executing the program. The memory 112 includes a random access memory (RAM) and a read only memory (ROM). The memory 112 functions as a work area for the CPU 111 to execute the print control program 13 stored in the auxiliary storage device 121. Note that the print control program 13 is provided by being stored in the computer-readable recording medium (non-transitory recording medium). That is, for example, the user purchases the optical disk 19 as a recording medium of the print control program 13, inserts the optical disk into the optical disk drive 122, reads the print control program 13 from the optical disk 19, and installs the print control program 13 in the auxiliary storage device 121.

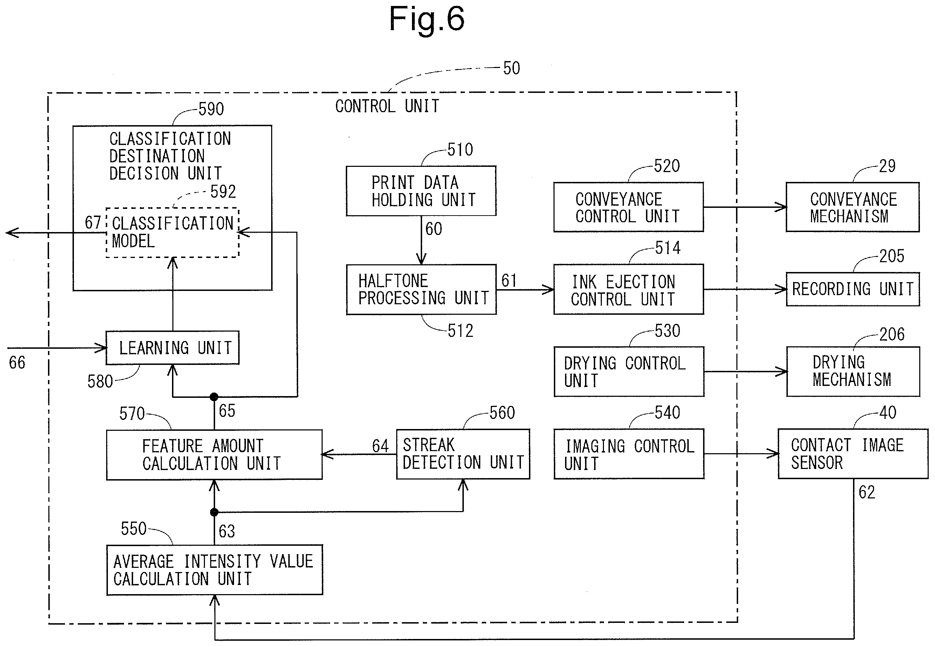

Note that, although only one CPU 111 is provided as a processor in the print control device 100 in the example illustrated in Fig. 5, the present invention is not limited thereto. A configuration using a plurality of processors such as a configuration using a plurality of CPUs can also be adopted. As the processor, in addition to the CPU 111, a micro processing unit (MPU), a graphics processing unit (GPU), a digital signal processor (DSP), or the like can also be adopted. Furthermore, a plurality of types of processors can be used in combination. For example, regarding the functional components (see Fig. 6) in the print control device 100, some components and the remaining components may be realized by different processors. Moreover, a configuration including a field-programmable gate array (FPGA) or an application specific integrated circuit (ASIC) can also be adopted.

<4. Functional Configuration of Print Control Device>

Fig. 6 is a block diagram illustrating a functional configuration of a control unit 50 implemented by the print control device 100 executing the print control program 13. The control unit 50 includes a print data holding unit 510, a halftone processing unit 512, an ink ejection control unit 514, a conveyance control unit 520, a drying control unit 530, an imaging control unit 540, an average intensity value calculation unit 550, a streak detection unit 560, a feature amount calculation unit 570, a learning unit 580, and a classification destination decision unit 590.

The print data holding unit 510 holds print data 60 after RIP processing transmitted from the print data generation apparatus 30. The halftone processing unit 512 generates halftone image data 61 including information indicating a dot size of ink corresponding to each pixel by applying halftone processing to the print data 60 after RIP processing. A specific method of the halftone processing is not particularly limited, and for example, a known method such as an error diffusion method or a dither method can be adopted. The ink ejection control unit 514 controls an amount of ink ejected from each nozzle included in each ink ejection head 251 constituting the recording unit 205 on the basis of the halftone image data 61. Note that the print data holding unit 510 holds test chart data representing a test chart for streak-shaped defect detection, as the print data 60 related to the present invention. Then, the ink ejection control unit 514 controls the ejection amount of ink from each nozzle on the basis of the halftone image data 61 generated by the halftone processing based on the test chart data, thereby forming a print image of the test chart on the printing paper 5.

The conveyance control unit 520 controls the speed (conveyance speed) at which a conveyance mechanism 29 conveys the printing paper 5. Note that the conveyance mechanism 29 is realized by the paper feeding unit 202, the first drive roller 203, the plurality of support rollers 204, the second drive roller 207, and the paper winding unit 208 (see Fig. 2). The drying control unit 530 controls a temperature (drying temperature) when the drying mechanism 206 dries the printing paper 5 after printing. The imaging control unit 540 controls a timing of capturing a print image by the contact image sensor 40.

The average intensity value calculation unit 550, the streak detection unit 560, the feature amount calculation unit 570, the learning unit 580, and the classification destination decision unit 590 are functional components directly involved in the processing of classifying a streak-shaped defect on the basis of imaging data 62 including a plurality of intensity values obtained by capturing the print image of the test chart by the contact image sensor 40.

On the basis of the imaging data 62, the average intensity value calculation unit 550 calculates, for each of a plurality of pixel positions continuous in the paper width direction which is a direction orthogonal to the conveyance direction (direction in which the streak-shaped defect extends) of the print medium, an average intensity value 63 which is an average value of intensity values of a plurality of pixels having the same pixel position in the paper width direction. Note that the conveyance direction of the printing paper corresponds to a first direction, and the paper width direction corresponds to a second direction.

The streak detection unit 560 detects a streak-shaped defect on the basis of the average intensity value (average intensity value for each of the plurality of pixel positions) 63 calculated by the average intensity value calculation unit 550. How the streak-shaped defect is detected more specifically will be described later. The streak detection unit 560 outputs streak information 64 for specifying the position of the streak-shaped defect.

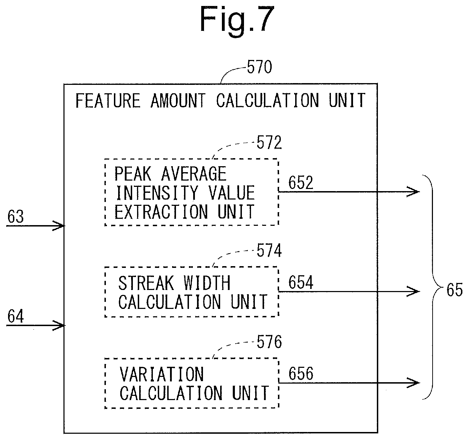

On the basis of the streak information 64 and the average intensity value (average intensity value for each of the plurality of pixel positions) 63 calculated by the average intensity value calculation unit 550, the feature amount calculation unit 570 obtains a feature amount 65 representing the feature of the streak-shaped defect. In the present embodiment, as illustrated in Fig. 7, the feature amount calculation unit 570 includes a peak average intensity value extraction unit 572, a streak width calculation unit 574, and a variation calculation unit 576. On the basis of the streak information 64, the peak average intensity value extraction unit 572 extracts, as a peak average intensity value 652, the "peak value of the average intensity value" (that is, the local maximum value) corresponding to the streak-shaped defect from the average intensity value 63 for each of the plurality of pixel positions. On the basis of the streak information 64 and the average intensity value 63 calculated by the average intensity value calculation unit 550, the streak width calculation unit 574 calculates a streak width 654 that is a width of the streak-shaped defect. On the basis of the streak information 64 and the average intensity value 63 calculated by the average intensity value calculation unit 550, the variation calculation unit 576 calculates a variation 656 in the average intensity value 63 around each streak-shaped defect. The variation 656 represents the granularity around the streak-shaped defect. As above, in the present embodiment, the feature amount calculation unit 570 obtains the peak average intensity value 652, the streak width 654, and the variation (variation in the average intensity value 63 around the streak-shaped defect) 656 as the feature amount 65 representing the feature of the streak-shaped defect. A more detailed description of how to obtain these three feature amounts 65 will be given later. Note that it is also possible to adopt a configuration in which at least one feature amount is obtained by the feature amount calculation unit 570 not on the basis of the average intensity value 63 but on the basis of the imaging data 62.

The learning unit 580 performs learning for classifying the streak-shaped defect. In this regard, in the present embodiment, the streak-shaped defect is classified into four stages of "large, medium, small, non-streak". Note that "non-streak" means that the detection by the streak detection unit 560 is false detection (erroneous detection). In order to enable learning by the learning unit 580, a classification destination corresponding to a combination of the three feature amounts 65 (the peak average intensity value 652, the streak width 654, and the variation 656) is designated in advance by a skilled person (worker). Under such a premise, the learning unit 580 causes the learning model to learn the relationship between the combination of the three feature amounts 65 and the classification destination using the three feature amounts 65 and the label (teacher data) 66 representing the classification destination designated by the skilled person as learning data. The learning unit 580 performs learning using a sufficient amount of learning data to generate a learned learning model with optimized parameters. The learned learning model generated in this manner is held in the classification destination decision unit 590 as a classification model 592 for classifying the streak-shaped defect.

The classification destination decision unit 590 includes the classification model (learned learning model for classifying streak-shaped defects) 592 described above, and obtains a classification destination 67 depending on the feature amount 65 by inputting the feature amount 65 obtained by the feature amount calculation unit 570 to the classification model 592.

<5. Method of Classifying Streak-Shaped Defects>

Next, a method of classifying the streak-shaped defect included in a print image will be described.

<5.1 Schematic Procedure>

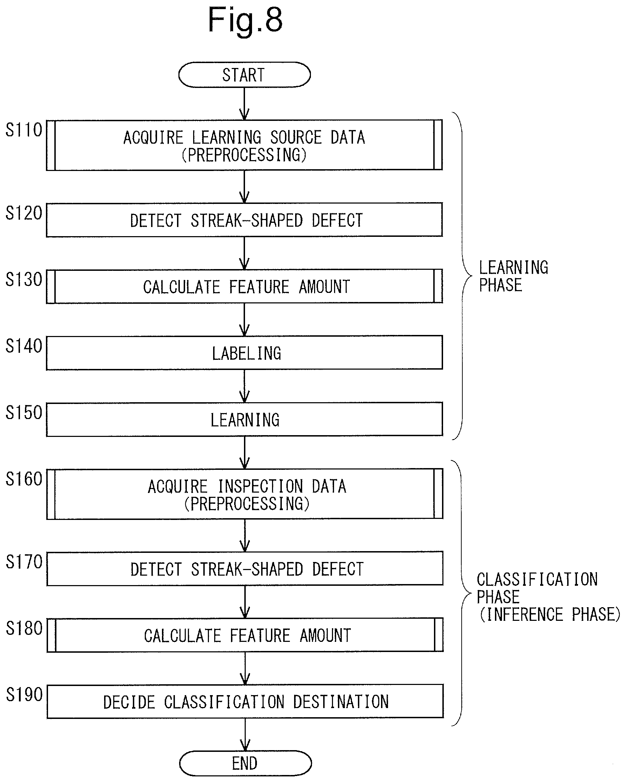

A schematic procedure of a series of processing for classifying the streak-shaped defect will be described with reference to a flowchart illustrated in Fig. 8. Note that, since the classification of the streak-shaped defect is performed using a machine learning method, a series of processing is divided into a learning phase and a classification phase (inference phase) as illustrated in Fig. 8. In this regard, the learning phase and the classification phase may not necessarily be executed by the same device (the print control device 100). For example, the classification phase may be executed by a device of a user of an inkjet printing apparatus 10 after the learning phase is executed by a device of a manufacturer of the inkjet printing apparatus 10.

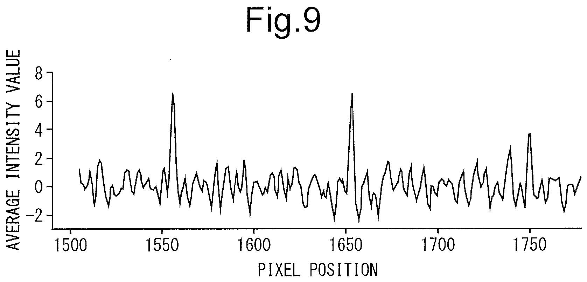

In the learning phase, first, preprocessing for acquiring data (hereinafter, it is referred to as "learning source data") that is a source of data used for learning by the learning unit 580 is performed (step S110). While details will be described later, in this preprocessing, data of an average intensity value (an average value of intensity values of a plurality of pixels having the same pixel position regarding the paper width direction) 63 for each of a plurality of pixel positions continuous in the paper width direction is finally generated as the learning source data. The average intensity values 63 for the plurality of pixel positions are expressed, for example, as illustrated in Fig. 9.

After completion of the preprocessing (step S110), the streak-shaped defect is detected using the learning source data (step S120). Then, the feature amount 65 representing the feature of the streak-shaped defect detected in step S120 is calculated on the basis of the learning source data (step S130). Details of the processing of detecting the streak-shaped defect and details of the processing of calculating the feature amount 65 will be described later.

Next, designation of a classification destination corresponding to the feature amount 65 calculated in step S130 (so-called "labeling work") is performed by a skilled person (worker) (step S140). As described above, in the present embodiment, learning using the three feature amounts 65 (the peak average intensity value 652, the streak width 654, and the variation 656) is performed. Therefore, in step S140, the classification destination corresponding to the combination of the three feature amounts 65 is designated by the skilled person.

Thereafter, processing of causing the learning model to learn the relationship between the combination of the three feature amounts 65 and the classification destination is performed using the three feature amounts 65 and the label 66 representing the classification destination designated in step S140 as learning data (step S150). As a result, the learned learning model (the classification model 592) in which the parameters are optimized is generated. Thus, the learning phase ends.

In the classification phase, first, preprocessing for acquiring inspection data to be subjected to detection and classification of the streak-shaped defect is performed (step S160). The content of the preprocessing in step S160 is similar to the content of the preprocessing in step S110. Therefore, the inspection data obtained in this step S160 is data of the average intensity value 63 for each of a plurality of pixel positions continuous in the paper width direction (see Fig. 9).

After completion of the preprocessing (step S160), the streak-shaped defect is detected using the inspection data (step S170). Then, the feature amount 65 representing the feature of the streak-shaped defect detected in step S170 is calculated on the basis of the inspection data (step S180).

Thereafter, the feature amount 65 (specifically, the peak average intensity value 652, the streak width 654, and the variation 656.) calculated in step S180 is inputted to the classification model 592 that is the learned learning model generated in step S150, so that the classification destination 67 depending on the feature amount 65 is obtained (step S190). Thus, the classification phase ends.

Note that, in the present embodiment, the first streak detection step is implemented by step S120, the classification destination designation step is implemented by step S140, the learning step is implemented by step S150, the streak detection step and the second streak detection step are implemented by step S170, the feature amount calculation step is implemented by step S180, and the classification destination decision step is implemented by step S190.

<5.2 Preprocessing>

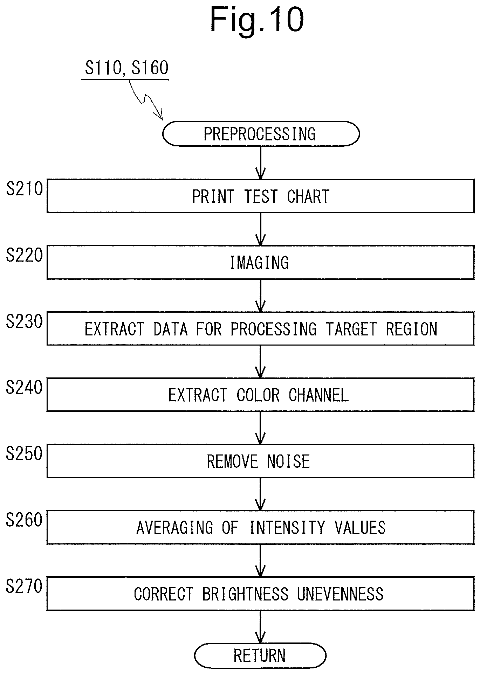

A detailed procedure of the preprocessing (processing in steps S110 and S160 in Fig. 8) will be described with reference to the flowchart illustrated in Fig. 10. This preprocessing is performed in the learning phase and also in the classification phase (inference phase).

After the start of the preprocessing, first, a test chart for streak-shaped defect detection is printed (step S210). Specifically, the halftone image data 61 is generated by performing halftone processing on the test chart data held in the print data holding unit 510, and a print image of the test chart is formed on the printing paper 5 by the ink ejection control unit 514 controlling the ejection amount of ink from each nozzle on the basis of the halftone image data 61 (see Fig. 6).

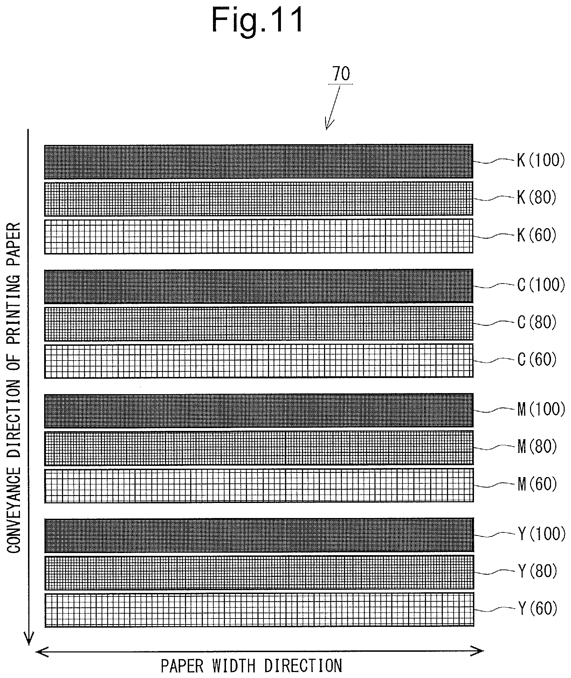

Fig. 11 is a diagram schematically illustrating the test chart 70. The test chart 70 includes three types of constant density regions for each ink color. More specifically, as illustrated in Fig. 11, the test chart 70 includes 100% solid image region, 80% solid image region, and 60% solid image region for each of K color, C color, M color, and Y color. Note that, in Fig. 11, for example, the 80% solid image region for C color is denoted by reference sign C(80).

After the test chart 70 as described above is printed, the print image of the test chart 70 is captured by the contact image sensor 40 (step S220). As a result, the imaging data 62 including a plurality of intensity values is obtained. Each of the plurality of intensity values constituting the imaging data 62 corresponds to a combination of a coordinate in the conveyance direction of the printing paper 5 and a coordinate in the paper width direction. In other words, the imaging data 62 includes data of one intensity value for each combination of the coordinate in the conveyance direction of the printing paper 5 and the coordinate in the paper width direction. That is, the imaging data 62 includes data of a intensity value corresponding to each coordinates on the two-dimensional plane.

Next, processing of extracting data for the processing target region from the imaging data 62 obtained in step S220 is performed (step S230). The streak-shaped defect is detected and classified for each ink color and each density.

Therefore, in step S230, a region corresponding to one ink color and one density is regarded as one processing target region. That is, data is extracted from the imaging data 62 for each region corresponding to one ink color and one density. Note that, as can be grasped from Fig. 11, in the present embodiment, 12 regions are sequentially set as processing target regions.

Next, data of a predetermined color channel is extracted from the data for the processing target region (step S240). In this regard, although the print image is formed by ejecting the K, C, M, and Y color inks from the recording unit 205 onto the printing paper 5, data of any pixel in the captured image obtained by capturing the print image by the contact image sensor 40 includes a grayscale intensity value, an R color (red) intensity value, a G color (green) intensity value, and a Y color (yellow) intensity value. In the present embodiment, in a case where a solid image region for a certain ink color other than the K color is a processing target region, data of a intensity value of a color having a complementary color relationship with the certain ink color is extracted from the data acquired in step S230. More specifically, in a case where the solid image region for the C color is the processing target region, the data of the intensity value of the R color is extracted from the data acquired in step S230, in a case where the solid image region for the M color is the processing target region, the data of the intensity value of the G color is extracted from the data acquired in step S230, and in a case where the solid image region for the Y color is the processing target region, the data of the intensity value of the B color is extracted from the data acquired in step S230. In a case where the solid image region for K color is the processing target region, data of the intensity value in grayscale is extracted from the data acquired in step S230.

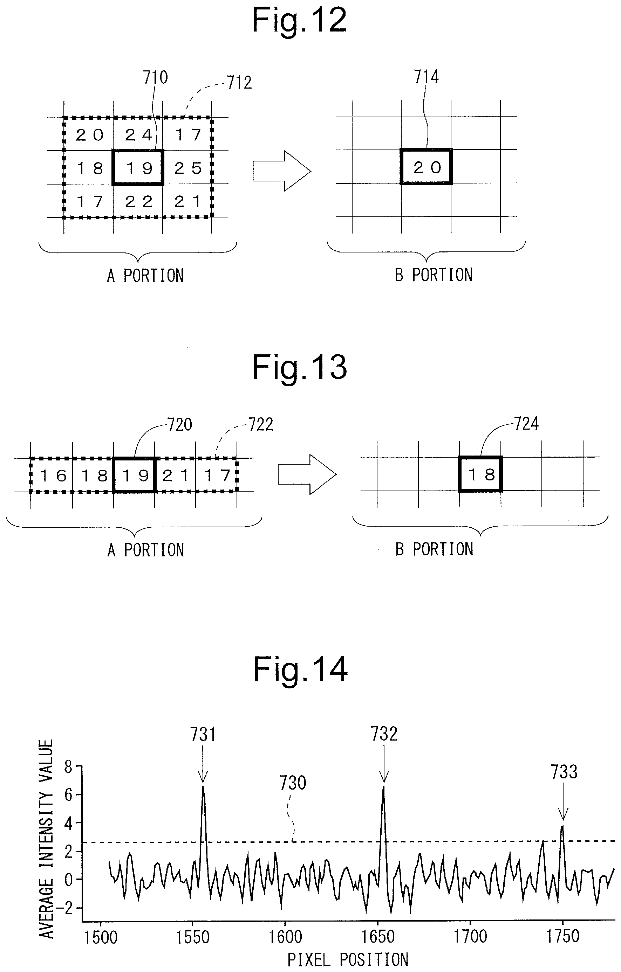

Next, processing of removing noise using a median filter is performed on the data acquired in step S240 (step S250). In this regard, the median filter is a filter in which the value of a pixel at the center of a predetermined region is replaced with a central value of the values of a plurality of pixels constituting the predetermined region. For example, when attention is paid to the values of 9 pixels in a dotted line denoted by reference sign 712 in the A portion of Fig. 12, the fifth largest value from the top is 20. Therefore, when the median filter is applied, the value of the pixel in a thick line portion denoted by reference sign 710 in the A portion of Fig. 12 is replaced with 20 as illustrated in a thick line portion denoted by reference sign 714 in the B portion of Fig. 12. In step S250, noise is removed from the data acquired in step S240 by applying such a median filter to the entire processing target region.

Next, regarding the data (data of intensity values) obtained in step S250, an average value of a plurality of intensity values having the same pixel position regarding the conveyance direction of the printing paper 5 is obtained for each of a plurality of pixel positions continuous in the paper width direction (step S260).

Finally, processing of correcting brightness unevenness by applying a median filter to the data (data of the average intensity value) obtained in step S260 is performed (step S270). In this regard, the data obtained in step S260 is spatially one-dimensional data. Therefore, in step S270, the value of the central pixel among the plurality of pixels continuous in the paper width direction is replaced with the central value of the values of the plurality of pixels. For example, when attention is paid to the values of five pixels within a dotted line denoted by reference sign 722 in the A portion of Fig. 13, the third largest value from the top is 18. Therefore, when the median filter is applied, the value of the pixel in a thick line portion denoted by reference sign 720 in the A portion of Fig. 13 is replaced with 18 as illustrated in a thick line portion denoted by reference sign 724 in the B portion of Fig. 13. In step S270, by applying such a median filter to the data of the average intensity value obtained in step S260, the data of the average intensity value from which the brightness unevenness is removed is obtained. Thus, the preprocessing ends.

Note that, in the present embodiment, the first test chart printing step is realized by step S210 performed in the learning phase, the test chart printing step and the second test chart printing step are realized by step S210 performed in the classification phase, the first imaging step is realized by step S220 performed in the learning phase, the imaging step and the second imaging step are realized by step S220 performed in the classification phase, the first average intensity value calculation step is realized by steps S230 to S270 performed in the learning phase, and the average intensity value calculation step and the second average intensity value calculation step are realized by steps S230 to S270 performed in the classification phase.

<5.3 Detection of Streak-Shaped Defect>

Details of the processing of detecting the streak-shaped defect (processing in steps S120 and S170 in Fig. 8) will be described. In order to detect the streak-shaped defect on the basis of the data generated by the preprocessing (the data of the average intensity value 63 for each of the plurality of pixel positions continuous in the paper width direction), in the present embodiment, a threshold for comparison with the average intensity value 63 is determined in advance. Then, an image at a pixel position corresponding to a local maximum value more than or equal to the threshold among a plurality of local maximum values extracted from the average intensity value 63 for each of the plurality of pixel positions is detected as the streak-shaped defect. In a case where the average intensity values 63 for the plurality of pixel positions are represented as illustrated in Fig. 9, for example, a threshold 730 is determined as illustrated in Fig. 14. In this case, images at pixel positions corresponding to local maximum values indicated by arrows denoted by reference signs 731 to 733 in Fig. 14 are detected as streak-shaped defects.

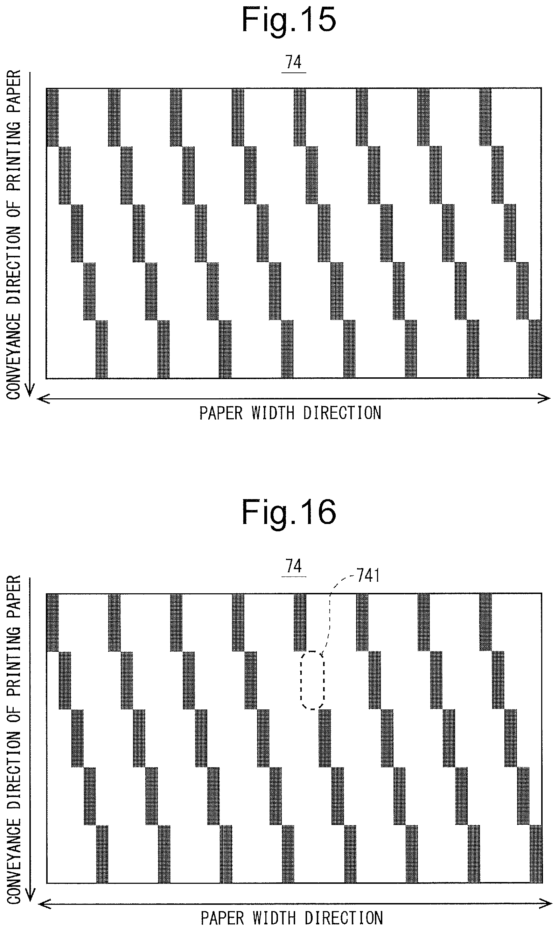

Note that the pixel position where the streak-shaped defect occurs can also be detected using a chart different from the test chart 70 illustrated in Fig. 11. For example, the pixel position where the streak-shaped defect occurs can be detected on the basis of imaging data (captured image) obtained by capturing the print image of a stepwise chart 74 as illustrated in Fig. 15. With respect to Fig. 15, each of black shaded portions is a region to be applied with ink by ejecting the ink from the nozzle included in the ink ejection head 251. As can be grasped from Fig. 15, the stepwise chart 74 includes a large number of linear patterns. Each linear pattern is a pattern formed by ejecting ink from one corresponding nozzle. Here, it is assumed that when printing is actually executed on the basis of data for forming the stepwise chart 74 illustrated in Fig. 15, a print image as schematically illustrated in Fig. 16 is obtained. Regarding a dotted line portion denoted by reference sign 741 in Fig. 16, ink is not at all applied to a region where ink is to be applied. From this, it is understood that an ejection failure occurs in a nozzle that should apply ink in a dotted line portion denoted by reference sign 741 in Fig. 16, and a streak-shaped defect may occur at a pixel position corresponding to the nozzle.

Furthermore, regarding the learning phase, the streak-shaped defect may be intentionally generated in the print image of the test chart by including the density value data for generating the streak-shaped defect in the test chart data. Then, since the pixel position where the streak-shaped defect occurs is specified in advance, the processing of detecting the streak-shaped defect on the basis of the data generated by the preprocessing becomes unnecessary. That is, the processing of step S120 in Fig. 8 can be omitted.

<5.4 Calculation of Feature Amount>

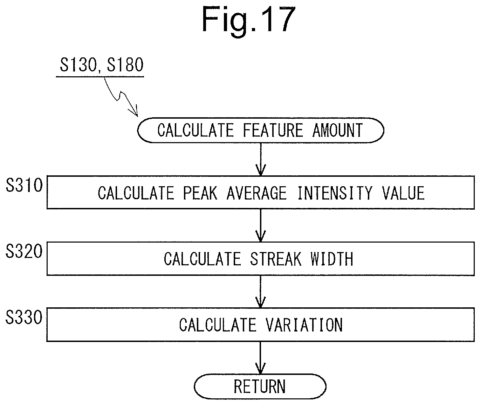

A detailed procedure of the processing of calculating the feature amount (processing in steps S130 and S180 in Fig. 8) will be described with reference to the flowchart illustrated in Fig. 17.

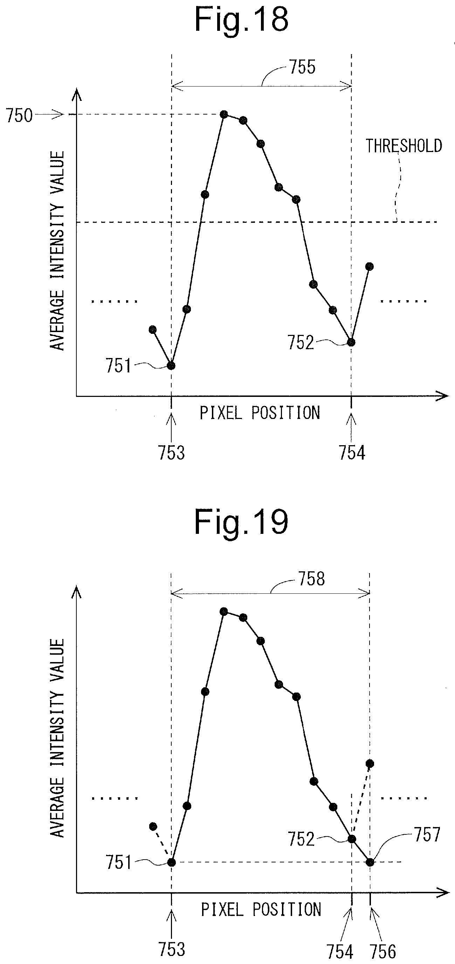

First, a peak average intensity value 652 is obtained (step S310). As described above, after the average intensity value 63 for each of the plurality of pixel positions continuous in the paper width direction is calculated by the preprocessing (steps S110 and S160 in Fig. 8), the image at the pixel position corresponding to the local maximum value more than or equal to a predetermined threshold among the plurality of local maximum values extracted from the average intensity value 63 for each of the plurality of pixel positions is detected as the streak-shaped defect (steps S120 and S170 in Fig. 8). Regarding the streak-shaped defect detected in this manner, the local maximum value corresponding thereto is regarded as the peak average intensity value. In other words, the maximum value (however, the maximum value is more than or equal to the threshold) of the average intensity value in the section from the start position of the monotonous increase to the end position of the monotonous decrease in the graph (for example, the graph illustrated in Fig. 9) representing the relationship between the pixel positions and the average intensity values is regarded as the peak average intensity value of the streak-shaped defect corresponding to the maximum value. In the example illustrated in Fig. 18, a maximum value 750 of the average intensity value in a section 755 from a pixel position (pixel position in the paper width direction) 753 corresponding to a point 751 to a pixel position 754 corresponding to a point 752 is the peak average intensity value of the streak-shaped defect existing at this position.

Next, a streak width is calculated (step S320). In step S320, first, an approximate curve of a graph representing the relationship between the pixel positions and the average intensity values is obtained for the portion where the streak-shaped defect is detected. In the example illustrated in Fig. 18, arithmetic processing of fitting the relationship between the pixel positions and the average intensity values to a Gaussian function is performed on the basis of a plurality of "combinations of pixel positions and average intensity values" in the section 755 from the pixel position 753 corresponding to the point 751 to the pixel position 754 corresponding to the point 752. That is, after the two pixel positions corresponding to the two local minimum values sandwiching the local maximum value corresponding to the streak-shaped defect among the plurality of local minimum values extracted from the average intensity value for each of the plurality of pixel positions regarding the paper width direction are obtained, arithmetic processing of fitting the relationship between the pixel positions and the average intensity values to the Gaussian function on the basis of the plurality of average intensity values between the two pixel positions is performed.

However, actually, the average intensity value of the pixel position (hereinafter, the pixel position is referred to as an "additional pixel position" for convenience) outside the streak-shaped defect among the two pixel positions adjacent to the pixel position corresponding to the larger local minimum value of the two local minimum values is assumed to be equal to the smaller local minimum value of the two local minimum values, and the arithmetic processing is performed in consideration of the data of the additional pixel position. Therefore, in a case where the relationship between the pixel positions and the average intensity values for the portion where the streak-shaped defect is detected is the relationship illustrated in Fig. 18, the average intensity value at the pixel position 756 adjacent to a pixel position 754 corresponding to the point 752 is considered to be equal to the average intensity value at the pixel position 753 as illustrated in Fig. 19 (see the point 751 and a point 757). Then, the arithmetic processing is performed on the basis of a plurality of average intensity values for a section 758 between the pixel position 753 and the pixel position 756.

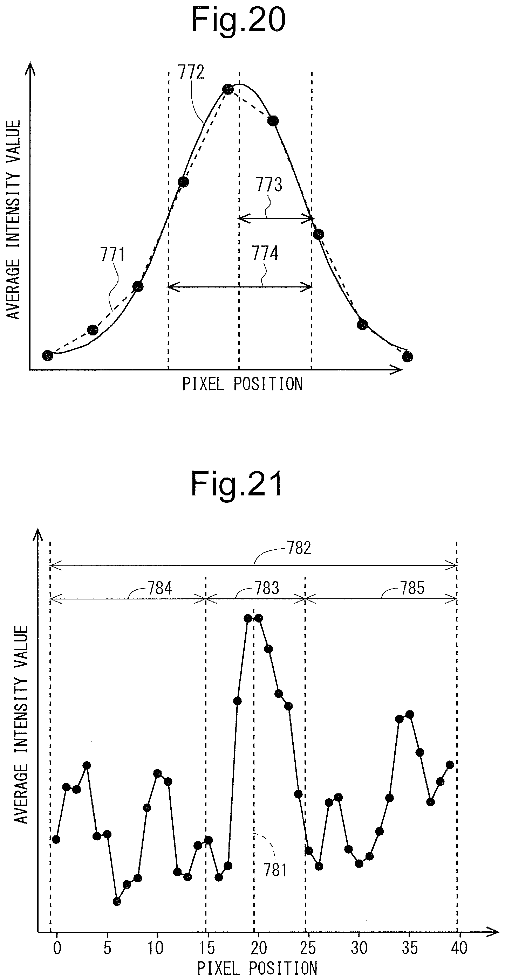

By performing the arithmetic processing as described above, for example, an approximate curve such as a curve denoted by reference sign 772 in Fig. 20 is obtained. Note that, in Fig. 20, reference sign 771 is assigned to a graph representing a "relationship between the pixel positions and the average intensity values" of the generation source of the approximate curve.

Meanwhile, in the arithmetic processing of obtaining the approximate curve, the standard deviation of the approximate curve is obtained. In the present embodiment, a value twice the standard deviation is regarded as the streak width. In the example illustrated in Fig. 20, the value corresponding to the length of an arrow denoted by reference sign 773 is the standard deviation of the approximate curve, and the value corresponding to the length of an arrow denoted by reference sign 774 is a value twice the standard deviation. Note that a value twice the standard deviation of the approximate curve is not necessarily required to be regarded as the streak width, and a value proportional to the standard deviation of the approximate curve may be regarded as the streak width.

After the streak width is calculated, the variation 656 in the average intensity value 63 around the streak-shaped defect is calculated (step S330). In the present embodiment, the standard deviation of the average intensity value 63 in the range excluding the range within 5 pixels from the center of the streak-shaped defect in the range within 20 pixels from the center of the streak-shaped defect is calculated as the variation 656 in the average intensity value 63 around the streak-shaped defect. Fig. 21 is a graph illustrating a "relationship between pixel positions and average intensity values" in a range within 20 pixels from a center 781 of a streak-shaped defect. In the example illustrated in Fig. 21, the standard deviation of the average intensity value 63 in a range (that is, a range represented by an arrow denoted by reference sign 784 and a range represented by an arrow denoted by reference sign 785) obtained by excluding a range represented by an arrow denoted by the reference sign 783 from a range represented by an arrow denoted by the reference sign 782 is calculated as the variation 656 in the average intensity value 63 around the streak-shaped defect. However, the range for obtaining the standard deviation of the average intensity value 63 is not limited thereto. The standard deviation of the average intensity value 63 in the range from the center of the streak-shaped defect to the first predetermined distance or more and the second predetermined distance or less regarding the paper width direction can be calculated as the variation 656 with the first predetermined distance being a distance less than the second predetermined distance. In the above example, a distance of 5 pixel width corresponds to the first predetermined distance, and a distance of 20 pixel width corresponds to the second predetermined distance. When the variation 656 is calculated, the processing of calculating the feature amount ends.

Note that, in the present embodiment, the first local maximum value extraction step is implemented by step S310 performed in the learning phase, the local maximum value extraction step and the second local maximum value extraction step are implemented by step S310 performed in the classification phase, the streak width calculation step is implemented by step S320 performed in the classification phase, the first variation calculation step is implemented by step S330 performed in the learning phase, and the variation calculation step and the second variation calculation step are implemented by step S330 performed in the classification phase.

<5.5 Learning>

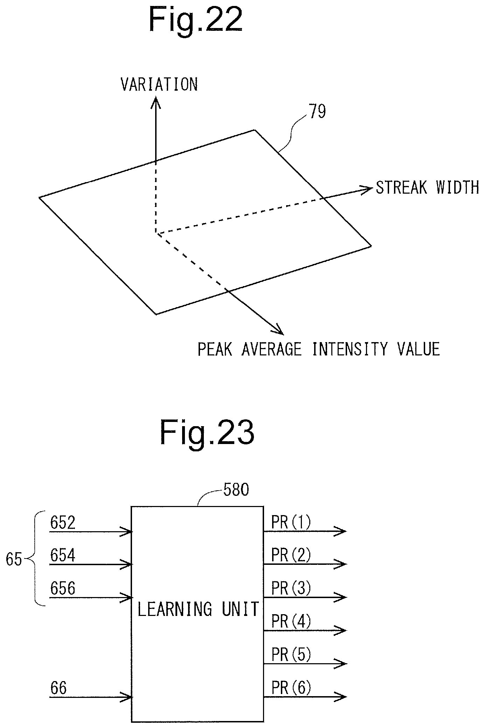

The learning performed in step S150 in Fig. 8 will be described in detail. In the present embodiment, the relationship between the combination of the three feature amounts 65 (the peak average intensity value 652, the streak width 654, and the variation 656) obtained in step S130 and the classification destination designated in step S140 is learned. As a learning method, a method using a support vector machine is adopted. The support vector machine is for separating two classes, and when learning by the support vector machine is performed on the basis of three feature amounts, an identification plane for separating the two classes is obtained. In the present embodiment, as schematically illustrated in Fig. 22, an identification plane 79 that separates two classes in a three-dimensional space including an axis of a peak average intensity value, an axis of a streak width, and an axis of variation is obtained. In step S190, the class of the classification destination for the data to be identified (classified) is decided on the basis of such an identification plane.

In the present embodiment, four classes are determined in order to classify streak-shaped defects into four stages of "large, medium, small, non-streak". In this regard, hereinafter, a class corresponding to "large" is referred to as a "first class", a class corresponding to "medium" is referred to as a "second class", a class corresponding to "small" is referred to as a "third class", and a class corresponding to "non-streak" is referred to as a "fourth class".

Although the support vector machine is for separating two classes as described above, it is necessary to classify streak-shaped defects into four classes in the present embodiment. Therefore, in step S150, an identification plane separating the first class and the second class, an identification plane separating the first class and the third class, an identification plane separating the first class and the fourth class, an identification plane separating the second class and the third class, an identification plane separating the second class and the fourth class, and an identification plane separating the third class and the fourth class are obtained. That is, six identification planes are obtained.

When an axis of the peak average intensity value is an x axis, an axis of the streak width is a y axis, and an axis of variation is a z axis, each identification plane is expressed by the following Formula (1).

$$ax + by + cz + d = 0 \cdots (1)$$

In the above Formula (1), a, b, c, and d are parameters.

In step S150, the values of the four parameters (a, b, c, and d) included in the above Formula (1) are obtained for each of the six identification planes. Obtaining the values of the four parameters for each of the six identification planes in this manner corresponds to generating the classification model 592 as a learned learning model.

At the time of learning, as illustrated in Fig. 23, three feature amounts 65 (the peak average intensity value 652, the streak width 654, and the variation 656) and a label 66 indicating a classification destination are inputted to the learning unit 580 as learning data. In the learning unit 580, learning of the relationship between the combination of the three feature amounts 65 and the classification destination is performed using the support vector machine on the basis of the learning data. Then, six parameter groups PR(1) to PR(6) for specifying the above-described six identification planes are outputted, and the classification model 592 is generated accordingly. Note that each parameter group PR includes the above-described four parameters (a, b, c, and d).

Meanwhile, although Fig. 22 illustrates the identification plane 79 formed in the three-dimensional space including the axis of the peak average intensity value, the axis of the streak width, and the axis of variation, it is also possible to adopt a method (kernel method) of forming the identification plane in a new high-dimensional feature amount space obtained by converting the three feature amounts 65 using a kernel function. When the kernel method is adopted, data of a feature amount that cannot be linearly separated can be converted into data that can be linearly separated.

<5.6 Decision of Classification Destination>

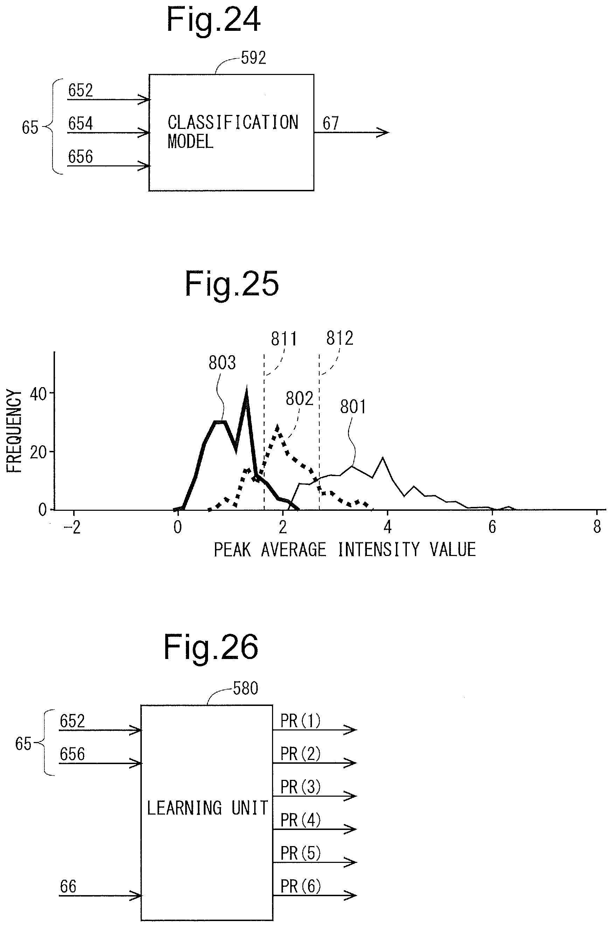

Details of the processing of determining the classification destination (processing of step S190 in Fig. 8) will be described. As described above, the streak-shaped defect to be classified is detected in step S170, and the feature amount 65 for the streak-shaped defect to be classified is obtained in step S180. Under such a premise, in step S190, as illustrated in Fig. 24, the peak average intensity value 652, the streak width 654, and the variation 656 in the average intensity value 63 around the streak-shaped defect are inputted to the classification model 592, which is a learned learning model, as the feature amount 65 of the streak-shaped defect to be classified. As a result, data indicating the classification destination 67 depending on the combination of the three feature amounts 65 is outputted from the classification model 592.

In the present embodiment, the streak-shaped defect is classified into four classes. That is, so-called "multi-class classification" is performed. Examples of a method of performing multi-class classification using a support vector machine include a one-to-one method and a one-to-many method. Although the method that can be actually adopted is not particularly limited, the one-to-one method is adopted in the present embodiment. Therefore, in order to realize classification into four classes, six identification planes are obtained by learning (step S150 in Fig. 8) using a support vector machine as described above.

Under the premise that six identification planes are obtained, when the feature amount 65 of the streak-shaped defect to be classified is inputted to the classification model 592, whether the streak-shaped defect should be classified into the first class or the second class is determined on the basis of the identification plane that separates the first class and the second class, whether the streak-shaped defect should be classified into the first class or the third class is determined on the basis of the identification plane that separates the first class and the third class, whether the streak-shaped defect should be classified into the first class or the fourth class is determined on the basis of the identification plane that separates the first class and the fourth class, whether the streak-shaped defect should be classified into the second class or the third class is determined on the basis of the identification plane that separates the second class and the third class, whether the streak-shaped defect should be classified into the second class or the fourth class is determined on the basis of the identification plane that separates the second class and the fourth class, and whether the streak-shaped defect should be classified into the third class or the fourth class is determined on the basis of the identification plane that separates the third class and the fourth class. The classification destination is decided by majority decision on the basis of the six decision results obtained in this manner. Note that, in a case where the classification destination is not decided by majority decision, for example, it is possible to determine the classification destination by a method called a maximum discriminant function method of preparing linear discriminant functions of the number of classes (in this embodiment, four linear identification functions) and classifying a target as a class having the maximum discriminant function value. As above, a known method may be adopted as a specific method related to multi-class classification.

<6. Effects>

According to the present embodiment, in a case where a streak-shaped defect is included in the print image of the test chart 70 for streak-shaped defect detection, three feature amounts 65 (the peak average intensity value 652, the streak width 654, and the variation 656 in the average intensity value 63 around the streak-shaped defect) representing the features of the streak-shaped defect are calculated. Then, the classification destination 67 depending on the feature of the streak-shaped defect is obtained by inputting the three feature amounts 65 to the classification model 592 that is a learned learning model for classifying the streak-shaped defect. By the way, according to human vision, the greater the variation in brightness (intensity value) around the streak, the less likely the streak is to be perceived. That is, the degree of the defect felt by a person with respect to the streak included in the print image depends on the variation in the intensity value around the streak. In this regard, in the present embodiment, since the streak-shaped defect is classified in consideration of the variation 656 in the average intensity value 63 around the streak-shaped defect, a result close to the classification by visual observation can be obtained. Furthermore, since the learned learning model is used for the classification, the streak-shaped defect included in the print image is automatically classified. From the above, according to the present embodiment, it is possible to automatically classify the streak-shaped defect included in the print image so as to obtain a result close to the classification by visual observation. Furthermore, since it is possible to take a suitable measure when the streak-shaped defect is detected, for example, wasteful consumption of the printing paper 5 and ink due to unnecessary reprinting is suppressed. Thus, it is possible to contribute to the achievement of the SDGs (sustainable development goals).

Here, a result of an experiment comparing the conventional technique and the technique of the present embodiment will be described. Note that, in this experiment, the streak-shaped defect is classified into three stages of "medium, small, non-streak". As a conventional method, a method of classifying the streak-shaped defect on the basis of a result of comparing a peak average intensity value with two thresholds is adopted. According to the results of classifying the inspection targets in this experiment by visual inspection by a skilled person, the "relationship between the peak average intensity value and the frequency" for each classification destination was as illustrated in Fig. 25. In Fig. 25, a solid line denoted by reference sign 801 represents the relationship between the peak average intensity value and the frequency for the inspection targets classified as "medium", a thick dotted line denoted by reference sign 802 represents the relationship between the peak average intensity value and the frequency for the inspection targets classified as "small", and a thick solid line denoted by reference sign 803 represents the relationship between the peak average intensity value and the frequency for the inspection targets classified as "non-streak". With regard to the conventional method, two thresholds for classification are decided on the basis of the above relationships so that the accuracy rate is the highest. Specifically, two values corresponding to two dotted lines denoted by reference signs 811 and 812 in Fig. 25 are adopted as the thresholds for classification.

The results of the experiment are shown in Table 1. Note that, in this experiment, data for five different days is collected, and cross validation is performed with the data being divided into four.

TABLE 1

| INK COLOR | GRADATION (%) | ACCURACY RATE | |
|---|---|---|---|
| | | CONVENT IONAL METHOD | METHOD OF PRESENT EMBODIMENT |
| K | 100 | 0.730 | 0.802 |
| K | 80 | 0.689 | 0.769 |
| K | 60 | 0.713 | 0.771 |
| C | 100 | 0.778 | 0.804 |
| C | 80 | 0.667 | 0.749 |
| C | 60 | 0.717 | 0.771 |
| M | 100 | 0.782 | 0.787 |
| M | 80 | 0.802 | 0.823 |
| M | 60 | 0.779 | 0.787 |
| Y | 100 | 0.724 | 0.746 |
| Y | 80 | 0.731 | 0.754 |
| Y | 60 | 0.722 | 0.768 |
| AVERAGE | | 0.736 | 0.777 |

According to Table 1, the accuracy rate of the method of the present embodiment is higher than that of the conventional method for any ink color. Moreover, the accuracy rate of the method of the present embodiment is higher than that of the conventional method for any gradation. The overall accuracy rate of the method of the present embodiment is 4.1% higher than that of the conventional method. Thus, by adopting the method of the present embodiment, a result close to classification by visual observation can be obtained as compared with the conventional technique.

<7. Modifications>

Hereinafter, modifications of the above embodiment will be described.

<7.1 First Modification>

In the above embodiment, the peak average intensity value 652, the streak width 654, and the variation 656 in the average intensity value 63 around the streak-shaped defect are used as the feature amount 65 for classifying the streak-shaped defect. However, the present invention is not limited thereto, and a configuration not using the streak width 654 can also be adopted. That is, a configuration in which streak-shaped defects are classified on the basis of two feature amounts 65 (the peak average intensity value 652 and the variation 656 in the average intensity value 63 around streak-shaped defect) may be adopted.

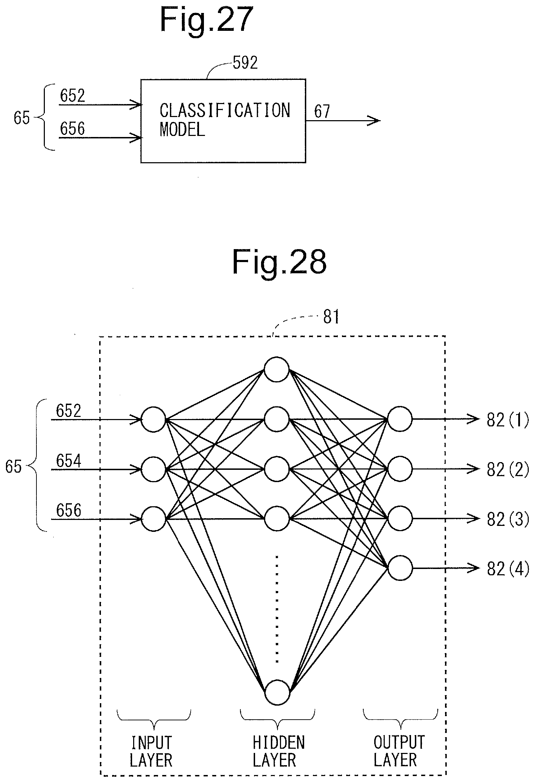

In the present modification, in step S150 of Fig. 8, as illustrated in Fig. 26, the two feature amounts 65 (the peak average intensity value 652 and the variation 656) and a label 66 indicating a classification destination are inputted to the learning unit 580 as learning data. Then, in the learning unit 580, learning of the relationship between the combination of the two feature amounts 65 and the classification destination is performed using the support vector machine on the basis of the learning data. As a result, similarly to the above embodiment, six parameter groups PR(1) to PR(6) for specifying six identification planes are outputted from the learning unit 580, and the classification model 592 is generated. Furthermore, in step S190 of Fig. 8, two feature amounts 65 are inputted to the classification model 592 as illustrated in Fig. 27. Then, data indicating the classification destination 67 depending on the combination of the two feature amounts 65 is outputted from the classification model 592.

<7.2 Second Modification>

In the above embodiment, a method using a support vector machine is adopted as a method of machine learning. However, the present invention is not limited thereto. For example, a method using a neural network (including a convolutional neural network) or a method using a random forest can also be adopted. Therefore, a method using a general forward propagation neural network will be described as a second modification.

Fig. 28 is a diagram illustrating an example of a structure of a neural network 81 used in the present modification. This neural network 81 is a general forward propagation neural network, and includes an input layer, a hidden layer (intermediate layer), and an output layer. The input layer includes a number of units equal to the number of the feature amounts 65 (that is, the input layer includes three units). The number of units of the hidden layer is not particularly limited. Furthermore, although the number of hidden layers is 1 in the example illustrated in Fig. 28, the number of hidden layers may be 2 or more. The output layer includes four units that output four pieces of probability data 82(1) to 82(4) indicating probabilities that each streak-shaped defect should be classified into each of the above-described four classes (first to fourth classes). The coupling between the input layer and the hidden layer and the coupling between the hidden layer and the output layer are full coupling. For example, a sigmoid function is adopted as the activation function of the hidden layer. As the activation function of the output layer, a softmax function is adopted in order to set the sum of the probability data 82(1) to 82(4) outputted from the neural network 81 to 1.

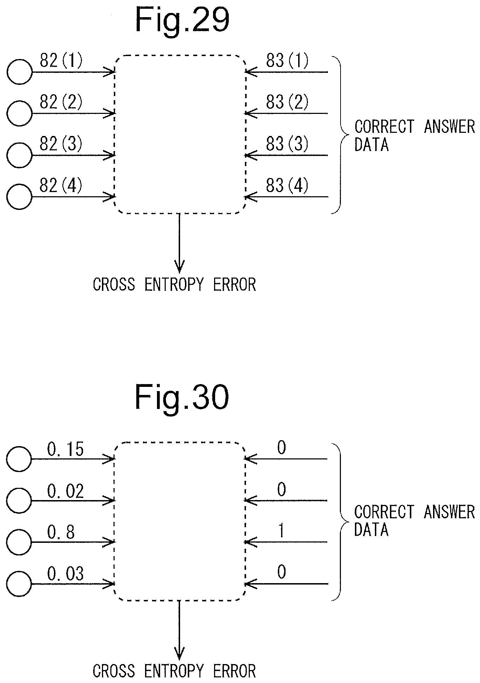

At the time of learning using the neural network 81, the peak average intensity value 652, the streak width 654, and the variation 656 in the average intensity value 63 around the streak-shaped defect are given to the input layer as the feature amount 65. As a result, forward propagation processing is performed in the neural network 81, and a cross entropy error is obtained, for example, on the basis of the probability data 82 (1) to 82 (4) outputted from the output layer and the correct answer data 83(1) to 83(4) (see Fig. 29). As an example, the cross entropy error is obtained on the basis of the probability data and the correct answer data as illustrated in Fig. 30. As illustrated in Fig. 30, the probability data 82(1) to 82(4) outputted from the output layer are data of 0 or more and 1 or less. Furthermore, as illustrated in Fig. 30, the correct answer data 83(1) to 83(4) are data of 1 or 0. For example, when learning is performed using data of a streak-shaped defect to be classified into the third class, only the correct answer data 83(3) is 1, and the correct answer data 83(1) to 83(2) and 83(4) is 0. The cross entropy error is obtained in this manner, and the parameters (weighting factor, bias) of the neural network 81 are updated so that the cross entropy error becomes as small as possible. By repeating such learning, the above parameters are optimized.

When the streak-shaped defect is classified using the neural network 81, the peak average intensity value 652, the streak width 654, and the variation 656 in the average intensity value 63 around the streak-shaped defect are given to the input layer as the feature amount 65 of the streak-shaped defect to be classified. Then, the forward propagation processing is performed in the neural network 81, whereby the probability data 82 (1) to 82(4) are outputted from the output layer. The class corresponding to the maximum value of the probability data 82(1) to 82(4) is decided as the classification destination for the streak-shaped defect to be classified.

<8. Others>

In the above-described embodiment (including the modifications), the inkjet printing apparatus 10 that performs color printing has been adopted. However, the present invention is not limited thereto, and an inkjet printing apparatus that performs monochrome printing may be adopted. However, in this case, the test chart for streak-shaped defect detection includes, for example, 100% solid image region, 80% solid image region, and 60% solid image region for only K color.

Furthermore, in the above-described embodiment (including modifications), the inkjet printing apparatus 10 using an aqueous ink is adopted. However, the present invention is not limited thereto, and for example, an inkjet printing apparatus using UV ink (ultraviolet curing ink) such as an inkjet printing apparatus for label printing may be adopted. In this case, an ultraviolet irradiation mechanism for curing the UV ink on the printing paper 5 by ultraviolet irradiation is provided inside the printing mechanism 201 (see Fig. 2) instead of the drying mechanism 206.

**Claims**

1.  A streak-shaped defect classification method of classifying a streak-shaped defect included in a print image, the streak-shaped defect classification method comprising:

    a test chart printing step (S210) of printing a test chart for streak-shaped defect detection;
    an imaging step (S220) of capturing a print image obtained in the test chart printing step (S210);
    an average intensity value calculation step (S230 to S270) of calculating, for each of a plurality of pixel positions continuous in a second direction orthogonal to a first direction in which the streak-shaped defect extends, an average intensity value (63) that is an average value of intensity values of a plurality of pixels having a same pixel position regarding the second direction on a basis of imaging data (62) including a plurality of intensity values obtained in the imaging step (S220);
    a feature amount calculation step (S180) of obtaining a feature amount (65) representing a feature of the streak-shaped defect on a basis of the imaging data (62) or the average intensity value (63) for each of the plurality of pixel positions; and
    a classification destination decision step (S190) of obtaining a classification destination (67) depending on the feature amount (65) by inputting the feature amount (65) to a learned learning model (592) for classifying the streak-shaped defect,
    wherein the feature amount calculation step (S180) includes:

    a local maximum value extraction step (S310) of extracting a local maximum value corresponding to the streak-shaped defect from the average intensity value (63) for each of the plurality of pixel positions; and
    a variation calculation step (S330) of calculating a variation in the average intensity value (63) around the streak-shaped defect, and
    in the classification destination decision step (S190), the local maximum value and the variation are inputted as the feature amount to the learned learning model (592).

2.  The streak-shaped defect classification method according to claim 1, wherein the feature amount calculation step (S180) further includes a streak width calculation step (S320) of calculating a streak width that is a width of the streak-shaped defect, and
    in the classification destination decision step, the streak width is further inputted as the feature amount (65) to the learned learning model (592).

3.  The streak-shaped defect classification method according to claim 2, wherein in the streak width calculation step (S320), two pixel positions corresponding to two local minimum values sandwiching the local maximum value corresponding to the streak-shaped defect among a plurality of local minimum values extracted from the average intensity value (63) for each of the plurality of pixel positions are obtained, and a value proportional to a standard deviation of an approximate curve obtained by fitting a relationship between pixel positions and average intensity values (63) to a Gaussian function on a basis of a plurality of the average intensity values (63) for positions between the two pixel positions is calculated as the streak width.

4.  The streak-shaped defect classification method according to claim 1, wherein in the variation calculation step (S330), a standard deviation of the average intensity value (63) in a range from a center of the streak-shaped defect to a first predetermined distance or more and a second predetermined distance or less regarding the second direction is calculated as the variation with the first predetermined distance being a distance less than the second predetermined distance.

5. The streak-shaped defect classification method according to claim 1, wherein the learned learning model (592) is a support vector machine.

6. The streak-shaped defect classification method according to any one of claims 1 to 5, further comprising a streak detection step (S170) of detecting the streak-shaped defect on a basis of the imaging data (62) or the average intensity value (63) for each of the plurality of pixel positions.

7. The streak-shaped defect classification method according to claim 6, wherein in the streak detection step (S170), an image at a pixel position corresponding to a local maximum value more than or equal to a predetermined threshold among a plurality of local maximum values extracted from the average intensity value (63) for each of the plurality of pixel positions is detected as the streak-shaped defect.

8. A streak-shaped defect classification method of classifying a streak-shaped defect included in a print image, the streak-shaped defect classification method comprising:

   a first test chart printing step (S210) of printing a first test chart for streak-shaped defect detection;
   a first imaging step (S220) of capturing a print image obtained in the first test chart printing step (S210);
   a first average intensity value calculation step (S230 to S270) of calculating, for each of a plurality of pixel positions continuous in a second direction orthogonal to a first direction in which the streak-shaped defect extends, a first average intensity value (63) that is an average value of intensity values of a plurality of pixels having a same pixel position regarding the second direction on a basis of first imaging data including a plurality of intensity values obtained in the first imaging step (S220);
   a first streak detection step (S120) of detecting the streak-shaped defect on a basis of the first imaging data (62) or the first average intensity value (63) for each of the plurality of pixel positions;
   a first local maximum value extraction step (S310) of extracting, as a first local maximum value, a local maximum value corresponding to the streak-shaped defect detected in the first streak detection step (S120) from the first average intensity value (63) for each of the plurality of pixel positions;
   a first variation calculation step (S330) of calculating, as a first variation, a variation in the first average intensity value (63) around the streak-shaped defect detected in the first streak detection step (S120);
   a classification destination designation step (S140) of, by a worker, designating a classification destination corresponding to a combination of the first local maximum value and the first variation;
   a learning step (S150) of causing a learning model to learn a relationship between a combination of the first local maximum value and the first variation and a classification destination using, as learning data, the first local maximum value, the first variation, and the classification destination designated in the classification destination designation step (S140);
   a second test chart printing step (S210) of printing a second test chart for streak-shaped defect detection;
   a second imaging step (S220) of capturing a print image obtained in the second test chart printing step (S210);
   a second average intensity value calculation step (S230 to S270) of calculating, for each of the plurality of pixel positions, a second average intensity value (63) that is an average value of intensity values of a plurality of pixels having a same pixel position regarding the second direction on a basis of second imaging data (62) including a plurality of intensity values obtained in the second imaging step (S220);
   a second streak detection step (S170) of detecting the streak-shaped defect on a basis of the second imaging data (62) or the second average intensity value (63) for each of the plurality of pixel positions;
   a second local maximum value extraction step (S310) of extracting, as a second local maximum value, a local maximum value corresponding to the streak-shaped defect detected in the second streak detection step (S170) from the second average intensity value (63) for each of the plurality of pixel positions;
   a second variation calculation step (S330) of calculating, as a second variation, a variation in the second average intensity value (63) around the streak-shaped defect detected in the second streak detection step (S170); and,
   a classification destination decision step (S190) of obtaining a classification destination (67) depending on a combination of the second local maximum value and the second variation by inputting the second local maximum value and the second variation to the learning model (592) learned in the learning step (S150).

9. A streak-shaped defect classification system that classifies a streak-shaped defect included in a print image, the streak-shaped defect classification system comprising:

an average intensity value calculation unit (550) that calculates, for each of a plurality of pixel positions continuous in a second direction orthogonal to a first direction in which the streak-shaped defect extends, an average intensity value (63) that is an average value of intensity values of a plurality of pixels having a same pixel position regarding the second direction on a basis of imaging data (62) including a plurality of intensity values obtained by capturing a print image of a test chart for streak-shaped defect detection;

a feature amount calculation unit (570) that obtains a feature amount (65) representing a feature of the streak-shaped defect on a basis of the imaging data (62) or the average intensity value (63) for each of the plurality of pixel positions; and,

a classification destination decision unit that obtains a classification destination (67) depending on the feature amount (65) by inputting the feature amount (65) to a learned learning model (592) for classifying the streak-shaped defect,

wherein the feature amount calculation unit (570) includes:

a local maximum value extraction unit (572) that extracts a local maximum value corresponding to the streak-shaped defect from the average intensity value (63) for each of the plurality of pixel positions; and

a variation calculation unit (576) that calculates a variation in the average intensity value (63) around the streak-shaped defect, and

the local maximum value and the variation are inputted as the feature amount (65) to the learned learning model (592) .

10. The streak-shaped defect classification system according to claim 9, wherein the feature amount calculation unit (570) includes a streak width calculation unit (574) that calculates a streak width that is a width of the streak-shaped defect, and

the streak width is further inputted as the feature amount (65) to the learned learning model (592).

11. The streak-shaped defect classification system according to claim 10, wherein the streak width calculation unit (574) obtains two pixel positions corresponding to two local minimum values sandwiching the local maximum value corresponding to the streak-shaped defect among a plurality of local minimum values extracted from the average intensity value (63) for each of the plurality of pixel positions, and calculates, as the streak width, a value proportional to a standard deviation of an approximate curve obtained by fitting a relationship between pixel positions and average intensity values to a Gaussian function on a basis of a plurality of the average intensity values (63) for positions between the two pixel positions.

12. The streak-shaped defect classification system according to claim 9, wherein the variation calculation unit (576) calculates, as the variation, a standard deviation of the average intensity value (63) in a range from a center of the streak-shaped defect to a first predetermined distance or more and a second predetermined distance or less regarding the second direction with the first predetermined distance being a distance less than the second predetermined distance.

13. The streak-shaped defect classification system according to claim 9, wherein the learned learning model (592) is a support vector machine.

14. The streak-shaped defect classification system according to any one of claims 9 to 13, further comprising a streak detection unit (560) that detects the streak-shaped defect on a basis of the imaging data (62) or the average intensity value (63) for each of the plurality of pixel positions.

15. The streak-shaped defect classification system according to claim 14, wherein the streak detection unit (560) detects, as the streak-shaped defect, an image at a pixel position corresponding to a local maximum value more than or equal to a predetermined threshold among a plurality of local maximum values extracted from the average intensity value (63) for each of the plurality of pixel positions.

# Fig.1

INKJET PRINTING APPARATUS

~100

PRINT CONTROL
DEVICE

~200

PRINTING MACHINE
BODY

~10

~4

PRINT DATA
GENERATION APPARATUS

~30

# Fig.2

EP 4 684 967 A1

# Fig.3

CONVEYANCE DIRECTION OF PRINTING PAPER

251

205

PAPER WIDTH DIRECTION

25Y    25M    25C    25K

Fig.4

PAPER WIDTH DIRECTION

NOZZLE GROUP IN FIRST ROW

NOZZLE GROUP IN SECOND ROW

NOZZLE GROUP IN THIRD ROW

NOZZLE GROUP IN FOURTH ROW

251

252(r)

252(p)

252(q)

NOZZLE

44

42

43

41

CONVEYANCE DIRECTION OF PRINTING PAPER

# Fig.5

## Fig.6

EP 4 684 967 A1

# Fig.7

570

FEATURE AMOUNT CALCULATION UNIT

572

PEAK AVERAGE
INTENSITY VALUE
EXTRACTION UNIT

652

63

574

STREAK WIDTH
CALCULATION UNIT

654

65

64

576

VARIATION
CALCULATION UNIT

656

# Fig.8

START

S110  ACQUIRE LEARNING SOURCE DATA
(PREPROCESSING)

S120  DETECT STREAK-SHAPED DEFECT

S130  CALCULATE FEATURE AMOUNT

S140  LABELING

S150  LEARNING

LEARNING
PHASE

S160  ACQUIRE INSPECTION DATA
(PREPROCESSING)

S170  DETECT STREAK-SHAPED DEFECT

S180  CALCULATE FEATURE AMOUNT

S190  DECIDE CLASSIFICATION DESTINATION

CLASSIFICATION
PHASE
(INFERENCE PHASE)

END

# Fig.9

# Fig.10

S110, S160

PREPROCESSING

S210 | PRINT TEST CHART

S220 | IMAGING

S230 | EXTRACT DATA FOR PROCESSING TARGET REGION

S240 | EXTRACT COLOR CHANNEL

S250 | REMOVE NOISE

S260 | AVERAGING OF INTENSITY VALUES

S270 | CORRECT BRIGHTNESS UNEVENNESS

RETURN

# Fig.11

# Fig.12

A PORTION → B PORTION

# Fig.13

A PORTION → B PORTION

# Fig.14

# Fig.15

74

CONVEYANCE DIRECTION OF PRINTING PAPER

PAPER WIDTH DIRECTION

# Fig.16

74 -741

CONVEYANCE DIRECTION OF PRINTING PAPER

PAPER WIDTH DIRECTION

# Fig.17

S130, S180

CALCULATE FEATURE AMOUNT

S310  CALCULATE PEAK AVERAGE INTENSITY VALUE

S320  CALCULATE STREAK WIDTH

S330  CALCULATE VARIATION

RETURN

# Fig.18

# Fig.19

# Fig.20

# Fig.21

# Fig.22

VARIATION

79

STREAK WIDTH

PEAK AVERAGE INTENSITY VALUE

# Fig.23

580

652

654

656

65

66

LEARNING UNIT

PR(1)

PR(2)

PR(3)

PR(4)

PR(5)

PR(6)

# Fig.24

```
        652
65  {   654  →   ┌─────────────────┐ ─592
        656  →   │  CLASSIFICATION │  67
             →   │  MODEL          │ ──→
                 └─────────────────┘
```

# Fig.25

```
FREQUENCY

40 │

20 │

 0 │
   └──┬────────┬────────┬────────┬────────┬──
     -2        0        2        4        6        8
           PEAK AVERAGE INTENSITY VALUE
```

# Fig.26

```
        652  →   ┌──────────────┐   PR(1) →
65  {            │ ─580         │   PR(2) →
        656  →   │              │   PR(3) →
                 │ LEARNING UNIT│   PR(4) →
                 │              │   PR(5) →
        66   →   │              │   PR(6) →
                 └──────────────┘
```

# Fig.27

```
                          ┌─592
              652      ┌──────────────┐
          ┌──────────→ │              │
      65 ┤              │CLASSIFICATION│  67
          │  656        │MODEL         │────→
          └──────────→ │              │
                       └──────────────┘
```

# Fig.28

# Fig.29

```
○  82(1)  →                    ←  83(1)  ⎫
○  82(2)  →                    ←  83(2)  ⎬  CORRECT ANSWER
○  82(3)  →                    ←  83(3)  ⎬  DATA
○  82(4)  →                    ←  83(4)  ⎭
              ↓
         CROSS ENTROPY ERROR
```

# Fig.30

```
○  0.15  →                    ←  0  ⎫
○  0.02  →                    ←  0  ⎬  CORRECT ANSWER
○  0.8   →                    ←  1  ⎬  DATA
○  0.03  →                    ←  0  ⎭
              ↓
         CROSS ENTROPY ERROR
```

# Fig.31

## EUROPEAN SEARCH REPORT

**Application Number**

EP 25 18 2003

### DOCUMENTS CONSIDERED TO BE RELEVANT

| Category | Citation of document with indication, where appropriate, of relevant passages | Relevant to claim |
|---|---|---|
| A | US 2010/303305 A1 (NACHLIELI HILA [IL] ET AL) 2 December 2010 (2010-12-02)<br>* figures 1-9 *<br>* paragraph [0060] *<br>* paragraph [0068] - paragraph [0094] *<br>* paragraph [0153] *<br>* paragraph [0175] - paragraph [0183] *<br>----- | 1-15 |
| A | US 2017/274690 A1 (UKISHIMA MASAYUKI [JP]) 28 September 2017 (2017-09-28)<br>* the whole document *<br>----- | 1-15 |
| A | US 9 844 961 B1 (MANTELL DAVID A [US] ET AL) 19 December 2017 (2017-12-19)<br>* the whole document *<br>----- | 1-15 |

**CLASSIFICATION OF THE APPLICATION (IPC)**

INV.
B41J2/165
B41J2/21
G06K15/02
G06N3/08
H04N1/407

**TECHNICAL FIELDS SEARCHED (IPC)**

B41J
H04N
G06M
G06N
G06K

The present search report has been drawn up for all claims

| Place of search | Date of completion of the search | Examiner |
|---|---|---|
| The Hague | 24 November 2025 | João, César |

EPO FORM 1503 03.82 (P04C01)

## ANNEX TO THE EUROPEAN SEARCH REPORT
## ON EUROPEAN PATENT APPLICATION NO.

EP 25 18 2003

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2025

| Patent document cited in search report | Publication date | Patent family member(s) | | Publication date |
|---|---|---|---|---|
| US 2010303305 A1 | 02-12-2010 | NONE | | |
| US 2017274690 A1 | 28-09-2017 | EP | 3228465 A1 | 11-10-2017 |
| | | JP | 6571575 B2 | 04-09-2019 |
| | | JP | 2017181094 A | 05-10-2017 |
| | | US | 2017274690 A1 | 28-09-2017 |
| US 9844961 B1 | 19-12-2017 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2017181094 A